# EUROPEAN PATENT SPECIFICATION

(11) **EP 3 401 027 B1**
(45) Date of publication and mention of the grant of the patent: **28.06.2023**
(21) Application number: 17170862.1
(22) Date of filing: 12.05.2017
(51) Int. Cl.: B08B 9/20, B08B 9/44, B65G 43/08, B65G 47/88

(54) **A FEEDING SYSTEM AND METHOD FOR FEEDING A WASHING UNIT WITH EMPTY ARTICLES**
ZUFÜHRSYSTEM UND VERFAHREN ZUM ZUFÜHREN LEERER ARTIKEL IN EINE WASCHEINHEIT
SYSTÈME ET PROCÉDÉ D'ALIMENTATION PERMETTANT D'ALIMENTER UNE UNITÉ DE LAVAGE EN ARTICLES VIDES

(43) Date of publication of application: 14.11.2018
(73) Proprietor: SIDEL S.P.A., 43126 Parma (IT)
(72) Inventor: BERZAGHI, Claudio, 37139 VERONA (IT)
(74) Representative: Sidel Group

(56) References cited:
- JP-A- 2000 072 232
- US-A- 3 643 780

## Description

The present invention relates to a feeding system for feeding a washing unit with empty articles.

The present invention also relates to a method of feeding a washing unit with empty articles, and to a method of updating a washing unit with a feeding system.

Washing machines are known with the purpose of cleaning the empty articles upstream of a filling and a labelling station, in which the articles are respectively filled with the pourable product and labelled with respective labels.

An example of washing unit is known, e.g. from EP 2 727 660 as well as from US 3 643 780.

The known washing unit comprises:
- a feeding system;
- a washing tunnel;
- a looped chain conveyor for advancing the articles along a closed path and which extends inside the washing tunnel from an inlet station to an outlet station; and
- a plurality of successive treatment zones through which the chain conveyor advances the articles.

In detail, the feeding system comprises an endless conveyor and a sequencing device interposed between the endless conveyor and the inlet station of the chain conveyor.

The endless conveyor comprises a plurality of channels along which respective rows of articles are advanced towards the inlet station of the chain conveyor.

The sequencing device withdraws, one after the other, the empty articles from respective rows of the endless conveyors and convey them to the chain conveyor with a given rate to the inlet station.

The chain conveyor is fed with respective rows of articles to be washed at the inlet station of the washing tunnel by the feeding system and outlets washed articles at the outlet station.

The treatment zones are arranged between the inlet station and the outlet station.

In detail, the treatment zones comprise: a prewash zone, a first cleaning zone, a second cleaning zone and a final rinsing zone.

The prewash zone, the first cleaning zone, the second cleaning zone comprise respective baths filled with a chemical agent and through which the containers are advanced.

The final rinsing zone comprises spraying means for spraying liquid chemical agents on the advancing containers.

Even well performing, the above-identified solution leaves room for improvement.

As a matter of fact, some articles can fall inside or break inside the channels of the endless conveyor.

Furthermore, some undesired objects can accumulate inside the channels of the endless conveyor.

There is therefore the risk that the fallen articles or the undesired objects can reach the chain conveyor and interfere with the proper operation of the washing tunnel.

In these cases, it is necessary to arrest the operation of the whole washing unit for a considerable amount of time, in order to remove the articles or the undesired objects from the channel.

This interruption inevitably penalizes the throughput of the washing unit and of the filling/labelling unit, which are arranged downstream of the outlet station of the chain conveyor.

Known from US3643780 is a feeding system as defined in the preamble of claim 1.

In order to avoid this reduction in the throughput, it has been proposed to shape the infeed conveyor as at least partly curvilinear, so as to ease the blocking of the fallen articles upstream of the washing unit.

However, also this proposal cannot ensure a proper and reliable detection of the fallen articles and/or missing articles upstream of the washing unit.

A need is therefore felt within the industry for a feeding system for feeding a washing unit with empty articles, which allows to eliminate the aforesaid drawback in a straightforward, low-cost manner.

It is an object of the present invention to provide a feeding system for feeding a washing unit for treating empty articles with empty articles, which meets the above requirements.

The aforementioned object is achieved by the present invention as it relates to a feeding system for feeding a washing unit with empty articles, as claimed in claim 1.

The invention also relates to a method of feeding a washing unit with empty articles, as claimed in claim6.

The invention also relates to a method of upgrading a washing unit for treating empty articles, as claimed in claim 10.

One preferred embodiment is hereinafter disclosed for a better understanding of the present invention, by way of non-limitative example and with reference to the accompanying drawings, in which:
- Figure 1 is a lateral view of a washing unit for treating empty articles comprising a feeding system in accordance with the invention, with parts removed for clarity;
- Figure 2 is a perspective enlarged view of the feeding system and of the washing unit of Figure 1, with parts removed for clarity; and
- Figures 3 to 7 show subsequent operative steps of the feeding system of Figures 1 and 2.

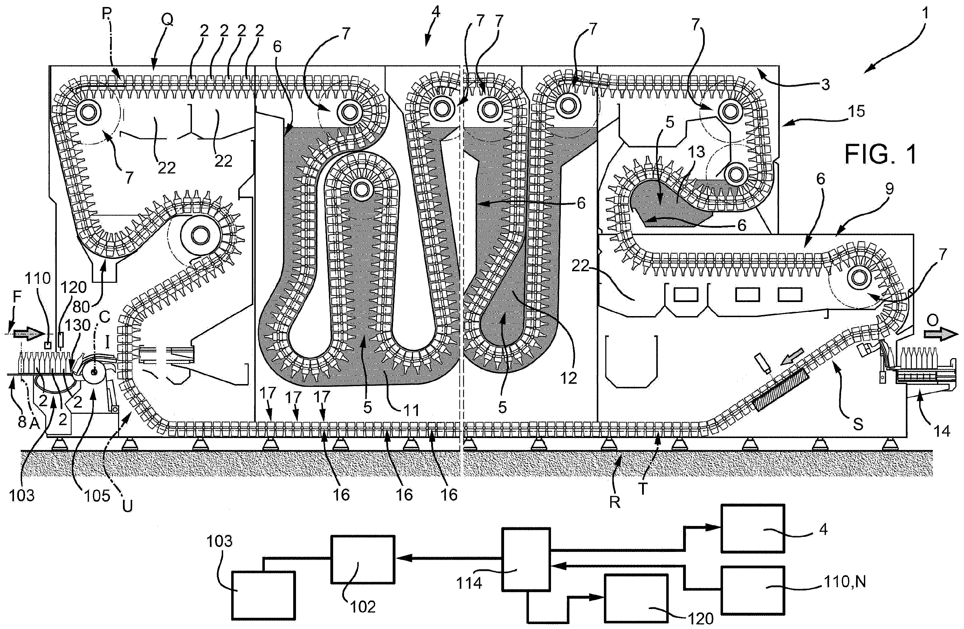

With reference to figures 1, numeral 1 indicates a washing unit for washing articles 2, in particular empty containers intended to be filled with a pourable product.

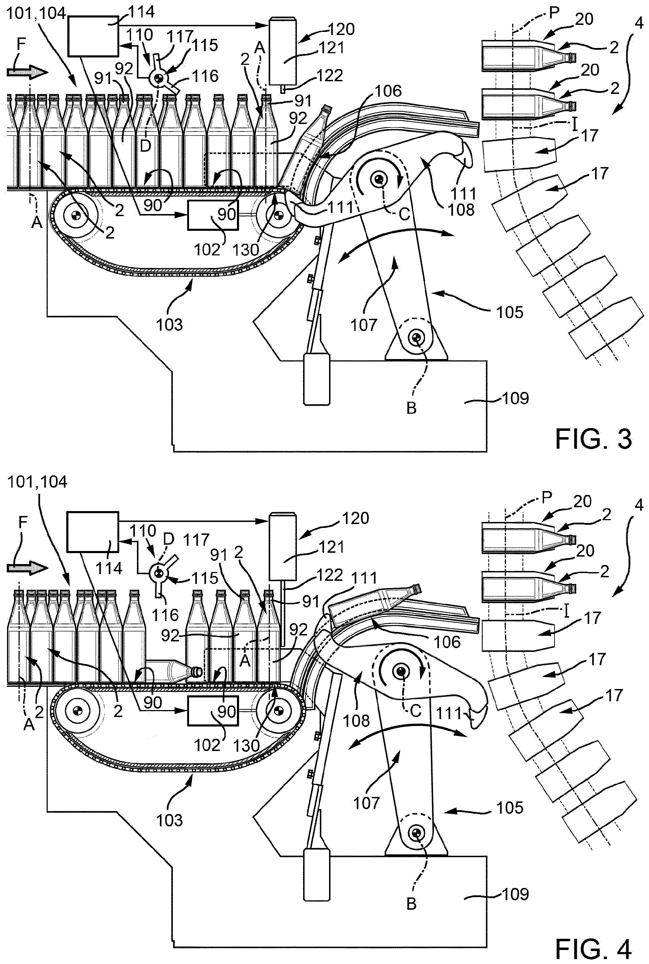

In detail, each article 2 extends along an axis A and comprises (Figures 3 to 7):
- a bottom portion 90;
- a neck portion 91; and
- a body 92.

Axis A is vertical, in the working condition at the inlet.

Washing unit 1 substantially comprises:
- a washing tunnel 3, which is fed with empty articles 2 to be washed and in which articles 2 are washed;
- a chain conveyor 4 for advancing articles 2 inside washing tunnel 3 along a closed loop path P; and
- a plurality of treatment zones 5, which are arranged inside washing tunnel 3 and comprise, in the embodiment shown, respective tanks 6 filled with respective cleaning agent and through which chain conveyor 4 advances articles 2.

Washing unit 1 also comprises:
- a feeding system 8, which feeds a sequence of rows 101 of articles 2 to be cleaned to chain conveyor 4 along a direction F and at an inlet station I of washing tunnel 3; and
- an outfeed conveyor 14, which receives a sequence of rows of cleaned articles 2 from chain conveyor 4 at an outlet station O of washing tunnel 3.

Direction F is, in the embodiment shown, horizontal and orthogonal to axes A of articles 2.

Feeding system 8 comprises, with special reference to Figures 3 to 7:
- a plurality of endless conveyors 103 (only one of which is shown in Figures 3 to 7) comprising respective channels 104 aligned along path P;
- a motor 102 (only schematically shown in Figures 3 to 7), which drives conveyors 103; and
- a sequencing device 105, which receives a plurality of rows 101 of articles 2 from relative conveyors 103 and feeds, one after the other, articles 2 of rows 101 to inlet station I of washing tunnel 3.

In detail, rows 101 are aligned parallel to direction F.

Sequencing device 105 comprises a frame 109.

Furthermore, sequencing device 105 comprises, for each channel 104:
- a conveying surface 106, which extends from conveyor 103 to station I of washing tunnel 3 along an arch-shaped shape;
- a lever 107 which is hinged to frame 109 about an axis B; and
- a lever 108 which is hinged to lever 107 about an axis C parallel to axis B and comprises two end fingers 111 adapted to contact bottom portions of articles 2 and to thrust articles 2 along surface 106.

Axes B, C are, in the embodiment shown, parallel to one another.

Axes B, C are, in the embodiment shown, orthogonal to vertical axis and direction P.

Sequencing device 105 also comprises a pair of actuators for causing the rotation of lever 107 with respect to frame 103 about axis B and the rotation of lever 108 with respect to lever 107 about axis C.

Thanks to the presence of levers 107, 108 hinged to another, each sequencing device 105 can transfer, one after the other, sequence 21 of article 2 of respective row 101 towards inlet station I of washing tunnel 3 with the right position, horizontal in the embodiment shown.

In the embodiment shown, each sequence 21 is formed by only forwardmost article 2, with reference to the advancing direction of articles 2 parallel to direction F.

In particular, sequencing device 105 can transfer article 2 of respective channel 104 along a not circular arch.

Path P comprises a work branch Q and a return branch R.

Work branch Q extends from inlet station I to outlet station O while return branch R extends from outlet station O to return station I.

In the embodiment shown, path P lies on a vertical plane, and conveyors 8, 14 advance articles 2 along a horizontal direction.

In particular, treatment zones 5 comprise a prewash zone, a first cleaning zone, a second cleaning zone.

The prewash zone, the first cleaning zone, the second cleaning zone comprise respective baths 11, 12, 13 filled with a cleaning agent.

For a better understanding, in Figure 1, the volume occupied by the cleaning solution has been highlighted by colouring the relative cross section in grey.

Due to the temperature of the cleaning agent, articles 2 are heated up as they travel inside bath 11, 12, 13.

Treatment zones 5 also comprises a rinsing zone 9, which is aimed to remove the chemical agents out of articles 2 and to cool them down. Rinsing zone 9 comprises a plurality of sprinkling device 10 acting one after the other on articles 2.

Chain conveyor 4 advances articles 2 along work branch Q and returns without articles 2 along return branch R.

Bath 11, 12, 13 and rinsing zone 9 are arranged, in this succession, along work branch Q of path P.

As evident from Figure 1, as they are advanced along work branch Q by chain conveyor 4, articles 2 can be arranged upside-down.

Furthermore, chain conveyor 4 comprises, along work branch Q,:
- a plurality of driven and driving wheels 7, which mesh with conveyor chain 4 and causes the movement thereof along path P; and
- a plurality of stationary supporting structures 22, which interacts with conveyor chain 4 to prevent the bending thereof.

Return branch R of path P comprises, proceeding from station O to station I:
- a descending portion S;
- a substantially horizontal portion T; and
- an ascending portion U.

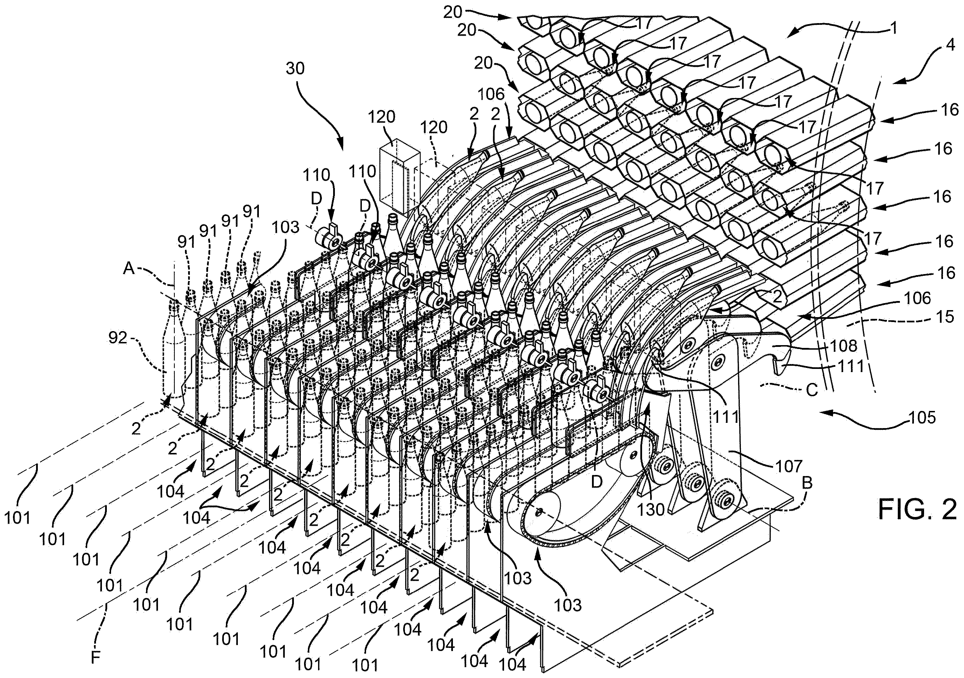

As shown in Figure 1, chain conveyor 4 comprises:
- a pair of chains 15 (only one of which is shown in Figure 2) elongated parallel to path P and parallel to one another; and
- a plurality of subsequent conveying beams 16, which extend between chains 15 and orthogonally to chains 15 and path P.

Chain conveyor 4 further comprises a stationary guide 80 for supporting chains 15.

Guide 80 is shaped in the same way as path P.

Each beam 16 comprises a plurality of seats 17 for holding relative articles 2.

Each beam 16 is adapted to receive forwardmost articles 2 of respective rows 101 from sequencing device 105.

In particular, forwardmost articles 2 of each row 101 are transferred by sequencing device 105 to respective seats 17 of beam 16 travelling at inlet station I.

Seats 17 are aligned horizontally and orthogonally to path P. Accordingly, also articles 2, when conveyed along work branch Q, are aligned onto relative beams 16 orthogonally to path P to form respective columns 20.

Advantageously, feeding system 8 comprises (Figures 3 to 7) :
- a plurality of sensors 110, which are configured to detect the presence and/or the correct position of articles 2 on conveyors 103 and are configured to generate respective signals in case of absence of articles 2 and/or wrong positioning of articles 2; and
- a plurality of stopping devices 120, which are functionally connected to respective sensors 110 and can be displaced in a stop position in which they prevent articles 2 from advancing on relative conveyors 103 if relative sensors 110 generate the relative signals.

In particular, each sensor 110 is operatively connected to a respective stopping device 120.

Furthermore, each sensor 110 is configured to detect the correct position of articles 2 on a respective channel 104 of relative conveyor 103 and to generate respective signals in case of absence of articles 2 and/or wrong positioning of articles on respective channel 104.

Each stopping device 120 can be put:
- either in a rest position, in which it allows articles 2 to advance on respective channel 104 of relative conveyor 103; or
- in the respective stop position, in which it prevents articles 2 from advancing on respective channel 104 of relative conveyor 103.

Each stopping device 120 is arranged downstream of relative sensor 110, proceeding along direction F parallel to the advancing sense of relative conveyor 103, i.e. towards sequencing device 105.

In the embodiment shown, each stopping device 120 is arranged at an end 130 of respective channel 104 adjacent to sequencing device 105.

Feeding system 8 also comprises a control unit 101, which is functionally connected with sensors 110 and stopping devices 120.

In greater detail, control unit 114 is configured to put each stopping device 120 in the stop position if corresponding sensor 110 generates respective signal, i.e. if corresponding sensor 110 detects the absence or the incorrect position of an article 2 on respective channel 104 of respective conveyor 103.

Control unit 114 is also configured to put each stopping device 120 in the relative rest position if corresponding sensor 110 does not generate respective signal, i.e. if corresponding sensor 110 detects the correct position of article 2 on respective channel 104 of relative conveyor 103.

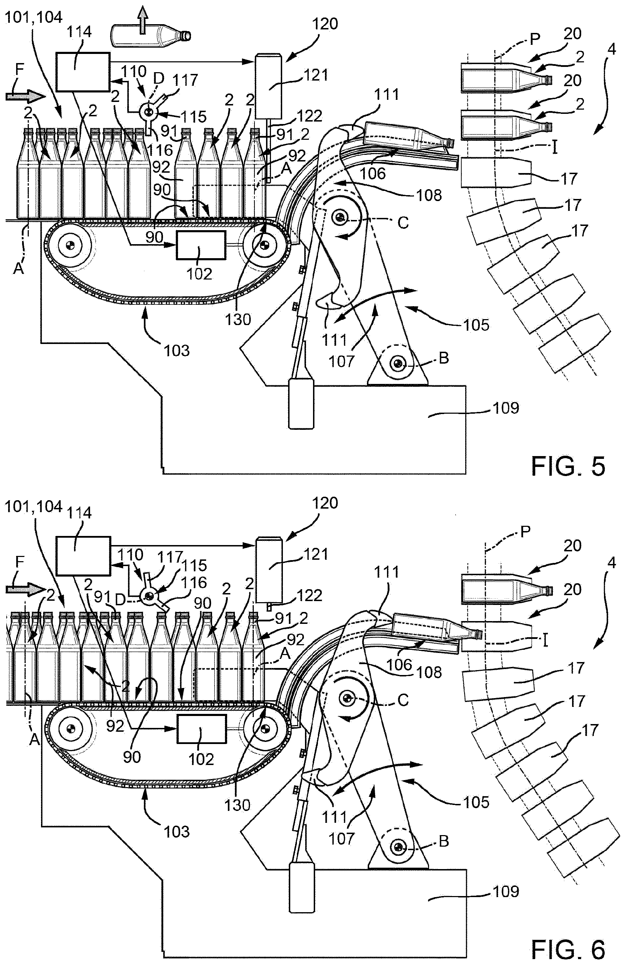

Control unit 114 is configured to generate a warning signal, preferably an acoustic signal, when one of sensor 110 has detected the absence of at least one articles 2 and/or wrong positioning of the article 2 on respective channel 104 (Figure 5).

In this case, respective stopping device 120 is set in the relative stop position and an operator may remove fallen article 2 or undesired objects from respective channel 104.

After the removal, control unit 114 moves back respective stopping device 120 in the relative rest position.

Control unit 114 is also programmed to arrest one or more conveyor 103 in cases corresponding sensors 110 have detected the absence of at least one articles 2 and/or wrong positioning of article 2 on a number N of channels 104 greater than a threshold value N₀.

In the following of the present description, only one sensor 110 and only one relative stopping device 120 are described with reference to only one relative conveyor 103, being preferably all sensors 110 and stopping devices 120 identical to one another.

In the embodiment shown, sensor 110 is a contact sensor, which contacts articles 2 when the latter are arranged in the correct position on relative conveyor 103 and remains detached from articles 2 when the latter are arranged in the wrong positions and/or are missing on conveyor 103.

In particular, sensor 110 can be an inductive sensor.

The sensor 110 comprises, in particular, (Figures 3 to 7) :
- a wheel 115 hinged about an axis D orthogonal to direction P with respect to a fixed structure; and
- a pair of fingers 116, 117 radially protruding from wheel 115 on the opposite radial side with respect to axis B.

Axis D is, in the embodiment shown, parallel to vertical axis and B.

When articles 2 are arranged in the correct position on conveyor 103, sensor 110 is normally set in a first position (Figure 3, 6 and 7) in which finger 116 is sloped with respect to axis A and extends on the side of sequencing device 105.

In this first position, finger 116 cooperates, on the opposite side thereof with respect to sequencing device 105, with neck portions 91 of articles 2 travelling on conveyor 103.

When articles 2 are arranged in the wrong position or are missing on conveyor 103, sensor 110 is set in a second position (Figures 4 and 5) in which finger 116 is parallel to vertical axis. Thus, on the basis of the position of finger 116 it is possible to detect whether or not articles 2 are present and correctly positioned on conveyor 103.

Stopping device 120 comprises a housing 121 fitted to a fixed structure and piston 122 which protrudes from housing 121 and can be extended or retracted parallel to vertical axis towards and away from conveyor 103.

When stopping device 120 is in the rest position, piston 122 is retracted and remains detached from articles 2 travelling on conveyor 103 (Figures 3, 6 and 7).

When stopping device 120 in the stop position, piston 122 is extended and contacts body 92 of articles 2 travelling on conveyor 103 (Figures 4 and 5).

Control unit 114 is also operatively connected with a not-shown driving unit of chain conveyor 4 to adjust the speed of chain conveyor 4, on the basis of number of channels 104 along which articles 2 are prevented from advancing by respective stopping devices 120 set in respective stop positions (Figure 1).

In greater detail, control unit 114 is programmed to adjust the speed of chain conveyor 4 in such a way that the throughput of washed articles 2 remains constant even if articles 2 are prevented from advancing along one or more channels 104.

Control unit 114 is operatively connected to motor 102 and to chain conveyor 4.

In particular, control unit 114 adjusts the speed of chain conveyor 4, on the basis of the number N of sensors 110 identifying that articles 2 are prevented from advancing along respective channels 104.

In case number N (and therefore the number of channels 104 along which articles 2 are prevented from travelling) increases, control unit 114 increases the speed of chain conveyor 4.

As a matter of fact, the greater N, the lower the number of articles 2 actually conveyed by conveyor chain 4.

In case number N decreases, control unit 114 decreases the speed of chain conveyor 4.

In particular, control unit 114 is programmed to adjust the speed of chain conveyor 4, as soon as empty seats 17, corresponding to channels 104 which are not feeding articles 2, reach outlet station O.

In this way, it is ensured that when washing unit 1 begins to reduce its throughput, the speed of chain conveyor 4 is adjusted.

The operation of washing unit 1 is described in detail in the following.

In the following, the operation of feeding system 8 is described with reference to only one sensor 110 and stopping device 120 arranged in only one channel 104 of relative only one conveyor 103.

Feeding system 8 advances a plurality of rows 101 of articles 2 to be washed inside channel 104 defined by conveyor 103 and parallel to direction F.

In this situation, stopping device 120 is set in the respective rest position, in which it allows articles 2 to advance on channel 104.

More precisely, piston 122 is retracted and is detached from necks 91 of articles 2 travelling on conveyor 103.

Articles 2 properly positioned are arranged with respective axes A orthogonal to direction P and with respective bottoms 90 lying on conveyor 103.

Articles 2 not properly positioned are arranged with respective axes A parallel to direction P.

Furthermore, some undesired objects can accumulate on conveyor 103.

Sensor 110 detects the correct/incorrect position of articles 2 on channel 104.

In particular, in case they are correctly positioned on conveyor 103, sensor 110 is set in the first position shown in Figure 3.

As a matter of fact, articles 2 keep finger 116 sloped with respect to axis A.

In case articles 2 are missing or are not properly positioned on conveyor 103, sensor 110 is set in the second position shown in Figures 2, 4 and 5 and generates the signal.

As a matter of fact, not properly positioned articles 2 do not contact fingers 116, which falls under the gravity action up to when it is set parallel to axis A.

The same happens in case undesired objects or no articles are set on conveyor 103.

If sensor 110 generates the signal, control unit 114 sets stopping device 120 in the stop position (Figure 4), in which piston 122 is extended and contacts body 92 of articles 2.

In this way, the flow of articles 2 along conveyor 103 is arrested (Figure 5) and relative seats 17 of beams 16 are not fed with stopped articles 2.

At this stage, the operator removes articles 2 from channel 104 and control unit 114 sets stopping device 120 again in the rest position. The flow of articles 2 along conveyor 103 can thus start again (Figure 6).

Control unit 114 is also programmed to arrest conveyor 103, in case number N of sensors 110 generating respective signals is greater than a threshold value N₀.

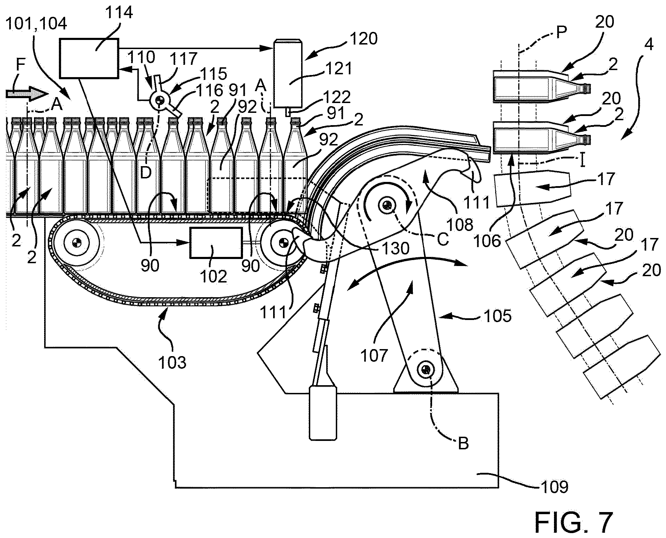

Sequencing device 105 receives again articles 2 from channels 104 and feeds them to inlet station I of washing tunnel 3 (Figure 7).

Beams 16 of chain conveyor 4 withdraw respective columns 20 of articles 2 at inlet station I from sequencing device 105, advance articles 2 inside washing tunnel 3 along work branch Q, discharge column 20 of cleaned articles 2 at outlet station O onto outfeed conveyor 14 and return along return branch R without articles 2.

Due to the fact that the advancement of articles 2 along N channels 104 is prevented by respective stopping devices 120, corresponding seats 17 of beams 16 are empty, as they travel along path P.

Control unit 114 adjusts the speed of chain conveyor 4 on the basis of number N in order to keep constant the throughput of washing unit 5.

In particular, control unit 114 evaluates number N of channels 104 along which articles 2 are prevented from advancing and calculates the time necessary for empty seats 17 to reach outlet station O.

In case number N is increasing (or decreasing), control unit 114 increases (or decreases) the speed of chain conveyor 4.

In particular, control unit 114 also adjusts the speed of chain conveyor 4 only once empty seats 17 have reached outlet station O.

Finally, feeding system 8 can be simply either coupled to a new washing tunnel 3 or coupled to an existing washing tunnel 3.

From an analysis of the features of feeding system 8 and of method according to the present invention, the advantages they allow to obtain are apparent.

In particular, feeding system 8 comprises:
- a plurality of sensors 110 for detecting the presence and the correct position of articles on conveyors 103; and
- a plurality of respective stopping devices 120 which can be displaced in a stop position in which they prevent articles 2 from advancing along conveyors 103 if sensors 110 detect the absence and/or the wrong positioning of articles 2.

In this way, it is possible to detect the presence of fallen articles 2, the absence of articles 2 and/or the presence of undesired objects on conveyors 103 in a prompt, reliable and automatic way.

Accordingly, the operator can remove the fallen articles 2 or the undesired objects from of conveyor 103, without arresting washing tunnel 3.

Thanks to the fact that feeding system 8 comprises for each channel 104 a respective sensor 110 and a respective stopping device 120, it is possible that only one operator works on different channels 104 and remove the fallen articles 2 or the undesired objects from one or more channels 104 when the relative alarm signal are generated.

Furthermore, control unit 114 is programmed for adjusting the speed of chain conveyor 4 if stopping devices 120 prevent articles 2 from flowing along an increasing or decreasing number of channels 104.

In this way, it is possible to ensure a substantially constant throughput, even though some seats 17 are empty.

Finally, feeding system 8 can be simply either coupled to a new washing tunnel 3 or coupled to an existing washing tunnel 3, without any need to redesigning the existing washing tunnel 3.

Clearly, changes may be made to feeding system 8 and method as described and illustrated herein without, however, departing from the scope of protection as defined in the accompanying claims.

In particular, feeding device 8 could comprise only one conveyor 103 with only one sensor 110 and only one stopping device 120.

## Claims

1. A feeding system (8) for feeding a washing unit (1) for treating empty articles (2) with said empty articles (2), comprising:
- at least one conveyor (103) for advancing said empty articles (2);
- at least one sensor (110), which is configured to detect the presence and/or the correct position of said empty articles (2) on said conveyor (103) and is configured to generate a signal in case of absence of said empty articles (2) and/or wrong position of said empty articles (2) ; and
- at least one stopper (120), which is operatively connected to said sensor (110) and can be displaced in a stop position, in which it prevents said empty articles (2) from advancing on said conveyor (103) if said sensor (110) generates said signal;
- said conveyor (103) comprises a plurality of channels (104) adapted, in use, to advance respective rows (101) of said empty articles (2);
said device (8) comprising one said sensor (110) and one said stopper (120) for each said channel (104);
and by comprising a control unit (114), which is operatively connected with said sensor (110) and is configured to generate an alarm if at least one said sensor (110) generates said signal, for example an acoustic alarm,
**characterized in that** said control unit (114) is programmed to stop said conveyor (103) in case the number (N) of said sensors (110) generating said respective signal is greater than a threshold value (N₀).

2. The feeding system of claim 1, **characterized in that** said sensor (110) is a contact sensor and is adapted to contact, in use, said articles (2) if the latter are present and/or in said correct position on said conveyor (103), and to remain free from said articles (2) if the latter are missing and/or arranged in an incorrect position on said conveyor (103).

3. The feeding system of any one of the foregoing claims, **characterized in that** said stopper (120) comprises:
- a frame (121); and
- an extractable rod (122), which can be extracted from said frame (121) and can be moved between a rest position in which it allows, in use, the advancement of said articles (2) on said conveyor (103) and said stop position in which it arrests, in use, said articles (2) advancing along said conveyor (103).

4. A washing unit (1) for treating empty articles (2), comprising:
- at least one treatment station (5) with a bath (11, 12, 13) fillable with a liquid treatment agent;
- a chain conveyor (4) cyclically movable between an inlet station (I) at which it is fed, in use, with said empty articles (2) to be washed and an outlet station (O) at which it discharges, in use, said washed empty articles (2) ; and
- a feeding system(8) according to any one of the foregoing claims;
said feeding system (8) conveying, in use, said articles (2) to said inlet station (I);
said chain conveyor (4) is a variable-speed chain conveyor.
**characterized in that** said chain conveyor (4) comprises a plurality of seats (17) fed, in use, with said empty articles (2) set in the correct position by said feeding device (8);
at least one of said seat (17) remaining, in use, empty, if said articles (2) are prevented, in use, from advancing along said conveyor (103) by at least one stopper (120);
a control unit (114) being configured to adjust the speed of said chain conveyor (4) on the basis of number (N) of sensors (110) generating, in use, said signal.

5. The washing unit of claim 4, **characterized in that** said control unit (114) is programmed to adjust said speed of said chain conveyor (4) as soon as empty seat (17), corresponding to channels (104) which are not feeding articles (2), reach said outlet station (O).

6. A method of feeding a washing unit (1) with empty articles (2), comprising the step of:
i) advancing said empty articles (2) by means of at least one conveyor (103);
ii) detecting the presence and/or the correct position of said empty articles (2) on conveyor (103);
iii) generating a signal in case of absence of said empty articles (2) and/or wrong position of said empty articles (2) on said conveyor (103);
iv) stopping said empty articles (2) on said conveyor (103) in case at least one sensor (110) generates said signal.
**characterized in that** said step i) comprises the step of vii) advancing a plurality of rows (101) of said empty articles (2) along respective channels (104) of respective said conveyors (103);
said step iii) comprising the step viii) of generating a signal in case of absence of said empty articles (2) and/or wrong position of said empty articles (2) on any of said row (101);
said step iv) comprising the step ix) of arresting said empty articles (2) on at least one said row (101) if a corresponding said sensor (120) generates said signal;
v) of generating an alarm in case said sensor generates said signal, for example an acoustic alarm, and
vi) of arresting said conveyor (103) in case the number (N) of said sensors (110) generating said signal is greater than a threshold value (N₀).

7. -A method of treating empty articles (2), comprising the steps of:
x) cyclically moving a conveyor chain (4) between an inlet station (I) at which it is fed with empty articles (2) to be treated and an outlet station (O) at which it discharges said treated empty articles (2);
xi) advancing said empty articles (2) within a bath (11) fillable with a liquid treatment agent during said step x); and the steps of
- the method of feeding according to claim 6, **characterized by** comprising the steps of:
xii) feeding said articles (2) set in said correct position to respective seats (17) of said chain conveyor (103);
xiii) conveying as empty at least one said seat (17) if at least one said sensor (110) generates said signal and at least one corresponding empty article (2) is prevented from advancing on said conveyor (103); and
xiv) adjusting the speed of said chain conveyor (4) on the basis of the number (N) of said sensors (110) generating respective said signal.

8. The method of claim 7, **characterized in that** said step xiv) comprises a step xv) of adjusting said speed when said empty seat (17) travels at said outlet station (O).

9. -A method of upgrading a washing unit (1) for treating empty articles (2), said washing unit (1) comprising:
- at least one treatment station (5) with a bath (11, 12, 13) fillable with a liquid treatment agent;
- a chain conveyor (4) cyclically movable between an inlet station (I) at which it is fed, in use, with said empty articles (2) to be washed and an outlet station (O) at which it discharges, in use, said washed empty articles (2) ;
**characterized by** comprising the step of arranging an feeding system (8) according to any one of claims 1 to 5 upstream of said inlet station (I).

## Patentansprüche

1. Zuführsystem (8) zum Zuführen, zu einer Wascheinheit (1) zur Behandlung von leeren Gegenständen (2), der leeren Gegenstände (2), umfassend:
mindestens einen Förderer (103) zum Vorwärtsbewegen der leeren Gegenstände (2);
mindestens einen Sensor (110), der dafür ausgelegt ist, das Vorhandensein und/oder die korrekte Position der leeren Gegenstände (2) auf dem Förderer (103) zu erfassen und dafür ausgelegt ist, im Fall von Abwesenheit der leeren Gegenstände (2) und/oder falscher Position der leeren Gegenstände (2) ein Signal zu erzeugen; und
mindestens einen Stopper (120), der betriebsfähig mit dem Sensor (110) verbunden ist und in eine Stopp-Position verschoben werden kann, in der er verhindert, dass die leeren Gegenstände (2) auf dem Förderer (103) vorwärts bewegt werden, wenn der Sensor (110) das Signal erzeugt; wobei der Förderer (103) eine Vielzahl von Kanälen (104) umfasst, die dazu eingerichtet sind, im Gebrauch entsprechende Reihen (101) von leeren Gegenständen (2) vorwärts zu bewegen;
wobei die Vorrichtung (8) für jeden Kanal (104) einen Sensor (110) und einen Stopper (120) umfasst; und
eine Steuereinheit (114) umfasst, die mit dem Sensor (110) in betriebsfähig verbunden ist und dafür ausgelegt ist, einen Alarm zu erzeugen, wenn mindestens einer der Sensoren (110) das Signal erzeugt, zum Beispiel einen akustischen Alarm,
**dadurch gekennzeichnet, dass** die Steuereinheit (114) so programmiert ist, dass sie den Förderer (103) stoppt, wenn die Anzahl (N) der Sensoren (110), die das jeweilige Signal erzeugen, größer als ein Schwellenwert (N₀) ist.

2. Zuführsystem nach Anspruch 1, **dadurch gekennzeichnet, dass** der Sensor (110) ein Kontaktsensor ist und dazu eingerichtet ist, im Gebrauch die Gegenstände (2) zu berühren, wenn letztere vorhanden und/oder sich in der richtigen Position auf dem Förderer (103) befinden, und von den Gegenständen (2) frei zu bleiben, wenn letztere abwesend sind und/oder sich in einer falschen Position auf dem Förderer (103) befinden.

3. Zuführsystem nach einem der vorhergehenden Ansprüche, **dadurch gekennzeichnet, dass** der Stopper (120) folgende Elemente umfasst:
einen Rahmen (121); und
eine ausfahrbare Stange (122), die aus dem Rahmen (121) ausgefahren werden kann und zwischen einer Ruheposition, in der sie im Gebrauch die Vorwärtsbewegung der Gegenstände (2) auf dem Förderer (103) ermöglicht, und der Stopp-Position, in der sie im Gebrauch die Vorwärtsbewegung der Gegenstände (2) entlang des Förderers (103) anhält, bewegt werden kann.

4. Wascheinheit (1) zur Behandlung von leeren Gegenständen (2), umfassend:
mindestens eine Behandlungsstation (5) mit einem Tauchbehälter (11, 12, 13), der mit einem flüssigen Behandlungsmittel befüllbar ist;
einen Kettenförderer (4), der zyklisch zwischen einer Einlassstation (I), an der ihm im Gebrauch die zu waschenden leeren Gegenstände (2) zugeführt werden, und einer Auslassstation (O), an der er im Gebrauch die gewaschenen leeren Gegenstände (2) abgibt, beweglich ist; und
ein Zuführsystem (8) nach einem der vorangehenden Ansprüche;
wobei das Zuführsystem (8) im Gebrauch die Gegenstände (2) zur Einlassstation (I) befördert;
wobei der Kettenförderer (4) ein Kettenförderer mit variabler Geschwindigkeit ist.
**dadurch gekennzeichnet, dass** der Kettenförderer (4) eine Vielzahl von Aufnahmen (17) umfasst, denen im Gebrauch die leeren Gegenstände (2) zugeführt werden, die durch die Zuführvorrichtung (8) in die richtige Position gebracht werden;
mindestens eine der Aufnahmen (17) im Gebrauch leer bleibt, wenn die Gegenstände (2) im Gebrauch durch mindestens einen Stopper (120) daran gehindert werden, sich entlang des Förderers (103) vorwärts zu bewegen;
eine Steuereinheit (114), die dafür ausgelegt ist, die Geschwindigkeit des Kettenförderers (4) auf der Grundlage der Anzahl (N) von Sensoren (110), die im Gebrauch das Signal erzeugen, einzustellen.

5. Wascheinheit nach Anspruch 4, **dadurch gekennzeichnet, dass** die Steuereinheit (114) so programmiert ist, dass sie die Geschwindigkeit des Kettenförderers (4) einstellt, sobald leere Aufnahmen (17), die Kanälen (104) entsprechen, die keine Gegenstände (2) zuführen, die Auslassstation (O) erreichen.

6. Verfahren zum Zuführen, zu einer Wascheinheit (1), von leeren Gegenständen (2), umfassend die folgenden Schritte:
i) Vorwärtsbewegen der leeren Gegenstände (2) mittels mindestens eines Förderers (103);
ii) Erfassen des Vorhandenseins und/oder der korrekten Position der leeren Gegenstände (2) auf dem Förderer (103) ;
iii) Erzeugen eines Signals im Falle von Abwesenheit der leeren Gegenstände (2) und/oder von falscher Position der leeren Gegenstände (2) auf dem Förderer (103);
iv) Stoppen der leeren Gegenstände (2) auf dem Förderer (103), wenn mindestens ein Sensor (110) das Signal erzeugt.
**dadurch gekennzeichnet, dass**
der Schritt i) den Schritt vii) des Vorwärtbewegens einer Vielzahl von Reihen (101) von leeren Gegenständen (2) entlang entsprechender Kanäle (104) der entsprechenden Förderer (103) umfasst;
der Schritt iii) den Schritt viii) des Erzeugens eines Signals im Falle von Abwesenheit der leeren Gegenstände (2) und/oder von falscher Position der leeren Gegenstände (2) auf einer jeglichen der Reihen (101) umfasst;
der Schritt iv) den Schritt ix) des Anhaltens der leeren Gegenstände (2) auf mindestens einer der Reihen (101) umfasst, wenn ein entsprechender Sensor (120) das Signal erzeugt,
v) Erzeugen eines Alarms, wenn der Sensor das Signal erzeugt, zum Beispiel eines akustischen Alarms, und
vi) Anhalten des Förderers (103), wenn die Anzahl (N) der Sensoren (110), die das Signal erzeugen, größer ist als ein Schwellenwert (N₀).

7. Verfahren zur Behandlung von leeren Gegenständen (2), umfassend die folgenden Schritte:
x) zyklisches Bewegen einer Förderkette (4) zwischen einer Einlassstation (I), an der ihr zu behandelnde leere Gegenstände (2) zugeführt werden, und einer Auslassstation (O), an der sie die behandelten leeren Gegenstände (2) abgibt;
xi) Vorwärtsbewegen der leeren Gegenstände (2) in einem Tauchbehälter (11), der während des Schritts x) mit einem flüssigen Behandlungsmittel befüllbar ist; und die Schritte des Verfahrens zum Zuführen nach Anspruch 6, **dadurch gekennzeichnet, dass** es die folgenden Schritte umfasst:
xii) Zuführen der in die korrekte Position gebrachten Gegenstände (2) zu den jeweiligen Aufnahmen (17) des Kettenförderers (103);
xiii) Befördern mindestens einer der Aufnahmen (17) als leer, wenn mindestens ein Sensor (110) das Signal erzeugt und mindestens ein entsprechender leerer Gegenstand (2) daran gehindert wird, auf dem Förderer (103) vorwärts bewegt zu werden; und
xiv) Einstellen der Geschwindigkeit des Kettenförderers (4) auf der Grundlage der Anzahl (N) der Sensoren (110), die das jeweilige Signal erzeugen.

8. Verfahren nach Anspruch 7, **dadurch gekennzeichnet, dass** der Schritt xiv) einen Schritt xv) des Einstellens der Geschwindigkeit umfasst, wenn sich die leere Aufnahme (17) an der Auslassstation (O) vorbei bewegt.

9. Verfahren zum Aufrüsten einer Wascheinheit (1) zur Behandlung von leeren Gegenständen (2), wobei die Wascheinheit (1) umfasst:
mindestens eine Behandlungsstation (5) mit einem Tauchbehälter (11, 12, 13), der mit einem flüssigen Behandlungsmittel befüllbar ist;
einen Kettenförderer (4), der zyklisch zwischen einer Einlassstation (I), an der ihm im Gebrauch die zu waschenden leeren Gegenstände (2) zugeführt werden, und einer Auslassstation (O), an der er im Gebrauch die gewaschenen leeren Gegenstände (2) abgibt, beweglich ist; **dadurch gekennzeichnet, dass** es den Schritt des Anordnens eines Zuführsystems (8) nach einem der Ansprüche 1 bis 5 stromaufwärts von der Einlassstation (I) umfasst.

## Revendications

1. Système d'alimentation (8) permettant d'alimenter une unité de lavage (1) pour traiter des articles vides (2) avec lesdits articles vides (2), comprenant :
- au moins un convoyeur (103) pour avancer lesdits articles vides (2) ;
- au moins un capteur (110), qui est configuré pour détecter la présence et/ou la position correcte desdits articles vides (2) sur ledit convoyeur (103) et est configuré pour générer un signal en cas d'absence desdits articles vides (2) et/ou d'une mauvaise position desdits articles vides (2) ; et
- au moins un élément d'arrêt (120), qui est relié de manière fonctionnelle audit capteur (110) et peut être déplacé dans une position d'arrêt, dans laquelle il empêche lesdits articles vides (2) d'avancer sur ledit convoyeur (103) si ledit capteur (110) génère ledit signal ;
- ledit convoyeur (103) comprend une pluralité de canaux (104) adaptés, en cours d'utilisation, pour avancer les rangées respectives (101) desdits articles vides (2) ;
ledit dispositif (8) comprenant ledit capteur (110) et ledit élément d'arrêt (120) pour chaque dit canal (104) ;
et en ce qu'il comprend une unité de commande (114), qui est reliée de manière fonctionnelle audit capteur (110) et est configurée pour générer une alarme si au moins un dit capteur (110) génère ledit signal, par exemple une alarme acoustique,
**caractérisé en ce que** ladite unité de commande (114) est programmée pour arrêter ledit convoyeur (103) au cas où le nombre (N) desdits capteurs (110) générant ledit signal respectif est supérieur à une valeur de seuil (N₀).

2. Système d'alimentation selon la revendication 1, **caractérisé en ce que** ledit capteur (110) est un capteur de contact et est adapté pour contacter, en cours d'utilisation, lesdits articles (2) si ces derniers sont présents et/ou dans ladite position correcte sur ledit convoyeur (103), et pour rester libre desdits articles (2) si ces derniers sont manquants et/ou disposés dans une position incorrecte sur ledit convoyeur (103).

3. Système d'alimentation selon l'une quelconque des revendications précédentes, **caractérisé en ce que** ledit élément d'arrêt (120) comprend :
- un cadre (121) ; et
- une tige extractible (122), qui peut être extraite dudit cadre (121) et peut être déplacée entre une position de repos dans laquelle elle permet, en cours d'utilisation, l'avancement desdits articles (2) sur ledit convoyeur (103) et ladite position d'arrêt dans laquelle elle arrête, en cours d'utilisation, lesdits articles (2) avançant le long dudit convoyeur (103) .

4. Unité de lavage (1) permettant de traiter des articles vides (2), comprenant :
- au moins une station de traitement (5) dotée d'un bain (11, 12, 13) pouvant être rempli d'un agent de traitement liquide ;
- un convoyeur à chaîne (4) pouvant être déplacé de manière cyclique entre une station d'entrée (I) au niveau de laquelle il est alimenté, en cours d'utilisation, en lesdits articles vides (2) devant être lavés et une station de sortie (O) au niveau de laquelle il décharge, en cours d'utilisation, lesdits articles vides lavés (2) ; et
- un système d'alimentation (8) selon l'une quelconque des revendications précédentes ;
ledit système d'alimentation (8) acheminant, en cours d'utilisation, lesdits articles (2) à ladite station d'entrée (I) ;
ledit convoyeur à chaîne (4) est un convoyeur à chaîne à vitesse variable ;
**caractérisée en ce que** ledit convoyeur à chaîne (4) comprend une pluralité de sièges (17) alimentés, en cours d'utilisation, en lesdits articles vides (2) réglés dans la position correcte par ledit dispositif d'alimentation (8) ;
au moins un dudit siège (17) restant, en cours d'utilisation, vide, si on empêche d'avancer lesdits articles (2), en cours d'utilisation, le long dudit convoyeur (103) par au moins un élément d'arrêt (120) ;
une unité de commande (114) étant configurée pour régler la vitesse dudit convoyeur à chaîne (4) sur la base du nombre (N) de capteurs (110) générant, en cours d'utilisation, ledit signal.

5. Unité de lavage selon la revendication 4, **caractérisée en ce que** ladite unité de commande (114) est programmée pour régler ladite vitesse dudit convoyeur à chaîne (4) dès qu'un siège vide (17), correspondant aux canaux (104) qui ne sont pas des articles d'alimentation (2), atteint ladite station de sortie (O).

6. Procédé d'alimentation d'une unité de lavage (1) dotée d'articles vides (2), comprenant les étapes suivantes :
i) l'avancement desdits articles vides (2) au moyen d'au moins un convoyeur (103) ;
ii) la détection de la présence et/ou de la position correcte desdits articles vides (2) sur le convoyeur (103) ;
iii) la génération d'un signal en cas d'absence desdits articles vides (2) et/ou d'une mauvaise position desdits articles vides (2) sur ledit convoyeur (103) ;
iv) l'arrêt desdits articles vides (2) sur ledit convoyeur (103) au cas où au moins un capteur (110) génère ledit signal ;
**caractérisé en ce que** ladite étape i) comprend l'étape vii) d'avancement d'une pluralité de rangées (101) desdits articles vides (2) le long des canaux respectifs (104) desdits convoyeurs (103) respectifs ;
ladite étape iii) comprenant l'étape viii) de génération d'un signal en cas d'absence desdits articles vides (2) et/ou une mauvaise position desdits articles vides (2) sur n'importe quelle de ladite rangée (101) ;
ladite étape iv) comprenant l'étape ix) d'arrêt desdits articles vides (2) sur au moins une dite rangée (101) si un dit capteur (120) correspondant génère ledit signal ;
v) de génération d'une alarme au cas où ledit capteur génère ledit signal, par exemple une alarme acoustique, et
vi) d'arrêt dudit convoyeur (103) au cas où le nombre (N) desdits capteurs (110) générant ledit signal est supérieur à une valeur de seuil (N₀).

7. Procédé de traitement d'articles vides (2), comprenant les étapes suivantes :
x) le déplacement de manière cyclique d'une chaîne de convoyeur (4) entre une station d'entrée (I) au niveau de laquelle elle est alimentée en articles vides (2) devant être traités et une station de sortie (O) au niveau de laquelle elle décharge lesdits articles vides traités (2) ;
xi) l'avancement desdits articles vides (2) à l'intérieur d'un bain (11) pouvant être rempli d'un agent de traitement liquide pendant ladite étape x) ; et les étapes suivantes :
- le procédé d'alimentation selon la revendication 6, **caractérisé en ce qu'**il comprend les étapes suivantes :
xii) l'alimentation desdits articles (2) réglés dans ladite position correcte par rapport aux sièges (17) respectifs dudit convoyeur à chaîne (103) ;
xiii) l'acheminement à vide d'au moins un dit siège (17) si au moins un dit capteur (110) génère ledit signal et si on empêche d'avancer au moins un article vide correspondant (2) sur ledit convoyeur (103) ; et
xiv) le réglage de la vitesse dudit convoyeur à chaîne (4) sur la base du nombre (N) desdits capteurs (110) générant ledit signal respectif.

8. Procédé selon la revendication 7, **caractérisé en ce que** ladite étape xiv) comprend une étape xv) de réglage de ladite vitesse lorsque ledit siège vide (17) se déplace au niveau de ladite station de sortie (O).

9. Procédé de mise à jour d'une unité de lavage (1) pour traiter des articles vides (2), ladite unité de lavage (1) comprenant :
- au moins une station de traitement (5) dotée d'un bain (11, 12, 13) pouvant être rempli d'un agent de traitement liquide ;
- un convoyeur à chaîne (4) pouvant être déplacé de manière cyclique entre une station d'entrée (I) au niveau de laquelle il est alimenté, en cours d'utilisation, en lesdits articles vides (2) devant être lavés et une station de sortie (O) au niveau de laquelle il décharge, en cours d'utilisation, lesdits articles vides lavés (2) ;
**caractérisé en ce qu'**il comprend l'étape de disposition d'un système d'alimentation (8) selon l'une quelconque des revendications 1 à 5 en amont de ladite station d'entrée (I).
